Europäisches Patentamt

European Patent Office

Office européen des brevets

(11) Publication number: **0 170 742**
**B1**

# EUROPEAN PATENT SPECIFICATION

(45) Date of publication of patent specification: **17.08.88**

(51) Int. Cl.⁴: **H 02 K 37/04**

(21) Application number: **84305333.1**

(22) Date of filing: **06.08.84**

(54) **Permanent magnet type stepping motor.**

(43) Date of publication of application:
**12.02.86 Bulletin 86/07**

(45) Publication of the grant of the patent:
**17.08.88 Bulletin 88/33**

(84) Designated Contracting States:
**DE FR GB IT**

(56) References cited:
**US-A-2 589 999**
**US-A-2 931 929**
**US-A-4 127 802**

**PATENT ABSTRACTS OF JAPAN, vol. 7, no.
166, 21st July 1983, (E-188) (1311); & JP-A-58-
72362 (NIHON SAABO K.K.) 30-04-1983**

(73) Proprietor: **JAPAN SERVO CO. LTD.
No. 7, Kandamitoshiro-Cho
Chiyoda-Ku Tokyo (JP)**

(72) Inventor: **Sakamoto, Masafumi
No. 358-10, Aioi-Cho
5-Chome Kiryu-Shi Gunma (JP)**

(74) Representative: **Hustwitt, Philip Edward et al
Hustwitt & Co. St. George's House 44 Hatton
Garden
London, EC1N 8ER (GB)**

Courier Press, Leamington Spa, England.

## Description

This invention relates to a permanent magnet type stepping motor, and in particular to an improvement to a permanent magnet type stepping motor provided with a stator which has coils wound onto a plurality of magnetic poles provided radially around the inner periphery of a cylindrical yoke with pole teeth formed on the tips of the magnetic poles, and a rotor comprising two cylindrical rotor poles with pole teeth provided around their circumferences and a cylindrical permanent magnet sandwiched between the rotor poles, positioned facing the inner periphery of the stator with a gap therebetween. A similar type of a stepping motor is shown in U.S.—A—4,127,802 wherein, however, the stator pole tips are formed on two annular pole pieces, which are sandwiched about a solenoid. US—A—2,589,99 however discloses a synchronous motor which is made up in the said way.

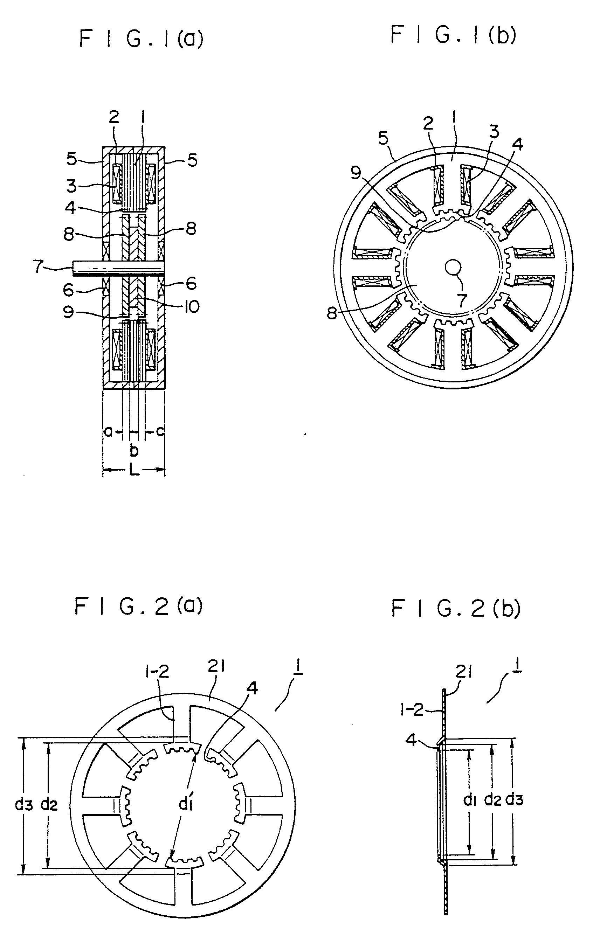

Referring to the drawings accompanying the present application, Fig. 1(a) is a section through a conventional stepping motor according to the preamble of claim 7, and Fig. 1(b) is a side view thereof. In the drawings, numeral 1 denotes a stator core provided with a plurality of magnetic poles disposed radially inward around the inner periphery of a cylindrical yoke, 2 denotes a stator coil bobbin provided around the circumference of each magnetic pole, 3 denotes a stator coil wound onto the bobbin 2, 4 denotes pole teeth provided on the tips of the stator core 1, and 9 denotes pole teeth of a rotor.

In Figs. 1(a) and 1(b), there are eight each of the magnetic poles and stator coils 3; the stator coils 3, which are positioned symmetrically around a rotor shaft 7, are connected in series to produce magnetic poles of the same polarity, so that four coil groups are formed as a result.

End brackets 5 are held in contact with the front and back of the stator core, the rotor shaft 7 is borne rotatably on bearings 6 provided in the end brackets 5, and the rotor constituted of rotor poles 8 and a permanent magnet 10 is attached to the rotor shaft 7. The arrangement is such that the pole teeth 4 provided on the stator magnet poles and the pole teeth 9 provided on the rotor poles 8 are at the same pitch, and the pole teeth 9 on the forward rotor pole 8 are shifted by 1/2 a pitch from those of the rearward rotor pole 8 with respect to the permanent magnet 10.

In the stepping motor shown in Figs 1(a) and 1(b), the pole teeth 9 of the rotor are attracted so as to line up with the pole teeth 4 of the magnetic poles on which conducting coils are wound by conducting sequentially the plurality of stator coil groups wound on the stator core, four coil groups in this illustration, and the rotor moves by 1/4 of the pitch of the pole teeth 9 at every change in the coil group conducted.

Thus the number of changes in the conduction of the coils in the stepping motor is proportional to the rotational angle of the rotor, therefore a control unit can be simplified, and this motor has been applied extensively of late to various applications needing control units.

However, in some kinds of control unit it is necessary to make the complete unit very thin and incorporate several of these units in a constant sized space, therefore the axial dimension of the stepping motor used in this unit must be minimized, so that in the stepping motor shown in Figs. 1(a) and 1(b) the axial length L is made small and the diameter large, to solve this problem.

In the motor of Figs. 1(a) and 1(b), the factors governing the length L are the thickness of the stator core 1, the thickness of the stator coil 3 and the bobbins 2 onto which the coils 3 are wound, the thickness of the end brackets 5, and the spaces necessary for insulation between each of the end brackets 5 and the stator coils 3. In this motor, the thickness of the end brackets 5 and the spaces necessary for insulation between the end brackets 5 and the coils 3 are almost constant regardless of the size of the motor, but the thickness of the stator core 1 and that of the stator coils 3 are closely related to the output of the stepping motor. When the ratio of the size to thickness exceeds a certain limit, the output drops suddenly to present a problem. In the constitution of Figs. 1(a) and 1(b), the factors determining the output of the stepping motor are the quantity of changing magnetic flux acting between the pole teeth 4 of the stator and the pole teeth 9 of the rotor opposite, the number of turns of the stator coils 3, and the current flowing therethrough. The thickness of the stator core 1 is nearly the same as the sum of the thickness $a$, $c$ of the rotor poles 8 and the thickness $b$ of the permanent magnet 10, i.e., $a + b + c$, however the only part of the core thickness influencing the output is the part corresponding to the thickness $a$ and $c$ facing the rotor poles 8, the part of the core corresponding to the thicknes $b$ of the permanent magnet 10 does not face the rotor pole, and hence does not contribute to the torque generation of the rotor. Thus it only increases the thickness of the core unnecessarily, and consequently the coil space is reduced so that the output can not be increased.

An object of this invention is to provide a stepping motor with a small axial length but a large output, thereby solving the above problems prevalent in the prior art.

According to the present invention there is provided a permanent magnet type stepping motor having a stator which comprises coils wound onto a plurality of poles provided radially around the inside of a cylindrical yoke with pole teeth formed on the tips of the poles, and a rotor comprising two axially spaced circular rotor poles, each rotor pole having teeth provided around the circumference thereof, and with an axially magnetized permanent magnet sandwiched between the two rotor poles, the rotor poles facing the stator poles and providing gaps therebetween, characterized in that the poles of the stator are divided into two substantially equal branches near the tips thereof so as to be axially spaced from each other and so that the pole tip of each branch of a pole faces one of the axially spaced circular rotor poles having the circumferentially provided teeth thereon, the axially spaced branches of the stator poles thus providing axially spaced and separated air gaps to the two rotor poles.

Other objects and features of this invention will be clarified below with reference to the accompanying drawings.

Fig. 1(a) is a section through a conventional type of stepping motor.

Fig. 1(b) is a longitudinally sectioned side view thereof;

Fig. 2(a) is a side view of the core of the stepping motor according to this invention;

Fig. 2(b) is a section thereof;

Fig. 3 is an assembly thereof; and

Fig. 4 is a section through the stepping motor of this invention.

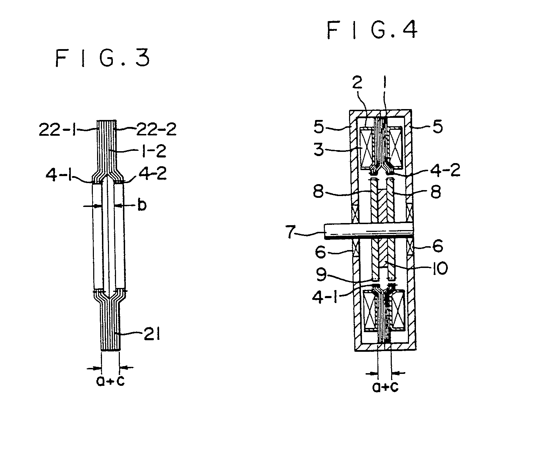

When punching out thin iron plate for the stator core 1 of the stepping motor according to this invention, as shown in Fig. 2(a), the radial length of magnet poles 1—2 thereof is made to be slightly longer than that of the magnetic poles of the core shown in Fig. 1 which is obtained for a conventional motor, i.e., the inner diameter $d'_1$ of the pole teeth 4 is made slightly smaller than the inner design diameter $d_1$. Each magnetic pole 1—2 is bent approximately 45° in the axial direction, as shown in Fig. 2(b), at a position at a radius $d_3$ near the tip of the magnetic pole 1—2, the bent tip portion is further bent at a position at a radius $d_2$, less than the radius $d_3$, so that it ends up parallel to the main core, thus the tip of each magnetic pole 1—2 is able to move around a circumference which is shifted a little axially but is still parallel to the core 1, and the inner diameter of the pole teeth 4 is adjusted to coincide with the inner design diameter $d_1$. A plurality of stator cores 1 are formed in this way so that the tips of the magnetic poles thereof are displaced axially but remain parallel, as shown in Fig. 3, and are stacked so that yoke parts 21 thereof and the magnetic poles 1—2 are placed over each other so as to make core stacks 22—1 and 22—2 in which pairs of magnetic poles are built up with their tips aligned in their direction of movement to thickness of a and c, opposite to each other in the direction in which the magnetic pole tips move in parallel. As shown in Fig. 3, the axial thickness of the yoke parts 21 and the axial thickness of the magnetic poles 1—2 are given by the dimensions a + c, the thickness of the pole teeth 4—1, 4—2 is the same as the thickness of the opposite rotor poles 8, and the pole teeth 4—1, 4—2 are positioned so as to be separated by the thickness b of the permanent magnet 10 provided between the rotor poles 8.

Fig. 4 is a section through the stepping motor of this invention which uses the stator core of Fig. 3, wherein similar parts to those in Fig. 1 are identified by the same reference characters with any further description thereof omitted.

As described above, the axial thickness of the magnetic poles on which the stator coils 3 are wound corresponds to the sum of a and c, shown in Figs. 1(a) and 1(b), and since there is no part generating torque and corresponding to b, the coil space can be increased. The pole teeth 4—1 and 4—2 of the core stacks 22—1 and 22—2 are positioned opposite to the rotor poles 8 axially and against each other, therefore the adjacent area of the pole teeth of the stator magnetic poles and the pole teeth of the rotor poles is the same as in the conventional example of Figs. 1(a) and 1(b), and the quantity by which the magnetic flux changes remains the same, thus increasing the output by the quantity by which the coil is increased.

The case in which the core stacks 22—1, 22—2 are constituted by piling up thin iron plates has been used in the description above, however, a method in which they are formed solidly by sintering a fine powder of a magnetic material, or a method in which they are molded solidly from a fine powder of a magnetic material with synthetic resin is also conceivable. In one technique of forming a fine powder of magnetic material solidly, the core stacks 22—1, 22—2 can be formed separately and the two pieces combined, or a technique in which the stacks 22—1 and 22—2 are formed together to the shape shown in Fig. 3 can be used. In this case a similar effect can be obtained by forming the portions of the pole teeth 4—1 and 4—2 axially in succession.

## Claims

1. A permanent magnet type stepping motor having a stator which comprises coils (3) wound onto a plurality of poles (1—2) provided radially around the inside of a cylindrical yoke (22—1) (22—2) with pole teeth (4—1) (4—2) formed on the tips of the poles (1—2), and a rotor comprising two axially spaced circular rotor poles (8), each rotor pole having teeth (9) provided around the circumference thereof, and with an axially magnetized permanent magnet (10) sandwiched between the two rotor poles (8), the rotor poles facing the stator poles and providing gaps therebetween, characterized in that the poles (1—2) of the stator are divided into two substantially equal branches near the tips thereof so as to be axially spaced from each other and so that the pole tip of each branch of a pole (1—2) faces one of the axially spaced circular rotor poles (8) having the circumferentially provided teeth thereon, the axially spaced branches of the stator poles thus providing axially spaced and separated air gaps to the two rotor poles.

2. The permanent magnet type stepping motor as defined in Claim 1, wherein said stator core (1) is formed by laminated thin iron plates.

3. The permanent magnet type stepping motor as defined in Claim 1, wherein said stator core (1) is formed by a sintered magnetic material.

4. The permanent magnet type stepping motor as defined in Claim 1, wherein said stator core (1) is formed by shaping a finely powdered magnetic material with a resin.

**Patentansprüche**

1. Dauermagnettyp-Schrittmotor, enthaltend einen Stator mit Wicklungen (3), die auf mehrere Pole (1—2) gewickelt sind, die radial um die Innenseite eines zylindrischen Jochs (22—1) (22—2) angeordnet sind, wobei Polzähne (4—1) — (4—2) an den freien Enden der Pole (1—2) ausgebildet sind, und einen Rotor mit zwei axial beabstandeten kreisförmigen Rotorpolen (8), wobei jeder Rotorpol Zähne (9) aufweist, die um den Umfang desselben angeordnet sind, und mit einem axial magnetisierten Dauermagnet (10), der sandwichartig zwischen den zwei Rotorpolen (8) angeordnet ist, wobei die Rotorpole den Statorpolen gegenüberstehen und mit diesen Spalte ausbilden, dadurch gekennzeichnet, daß die Statorpole (1—2) nahe ihrer freien Enden in zwei im wesentlichen gleiche Zweige unterteilt sind, die voneinander in axialer Richtung Abstand aufweisen und derart ausgebildet sind, daß das Polende eines jeden Zweiges eines Poles (1—2) einem der axial beabstandeten kreisförmigen Rotorpole (8), der die in Umfangsrichtung verteilten Zähne darauf aufweist, gegenübersteht, sodaß die axial beabstandeten Zweige der Statorpole axial beabstandete und getrennte Luftspalte zu den zwei Rotorpolen ausbilden.

2. Dauermagnettyp-Schrittmotor nach Anspruch 1, bei dem der Statorkern (1) aus geschichteten dünnen Eisenplatten besteht.

3. Dauermagnettyp-Schrittmotor nach Anspruch 1, bei dem der Statorkern (1) aus einem gesinterten magnetischen Material besteht.

4. Dauermagnettyp-Schrittmotor nach Anspruch 1, bei dem der Statorkern (1) durch Ausformung eines fein pulverisierten Magnetmaterials, das mit einem Harz versetzt ist, gebildet ist.

**Revendications**

1. Moteur pas à pas du type à aimant permanent, ayant un stator qui comprend des bobinages (3) enroulés sur une pluralité de pôles (1—2) prévus radialement autour de l'intérieur d'une culasse cylindrique (22—1), (22—2), des dents de pôle (4—1), (4—2) étant formées aux bouts des pôles (1—2), et un rotor comprenant deux pôles de rotor circulaires axialement espacés (8), chaque pôle de rotor ayant des dents (9) prévues autour de la circonférence de celui-ci, et comportant un aimant permanent axialement magnétisé (10) pris entre les deux pôles de rotor (8), les pôles de rotor faisant face aux pôles de stator et des espaces étant prévus entre eux, caractérisé en ce que les pôles (1—2) du stator sont divisés en deux branches sensiblement égales à proximité des bouts de ceux-ci, de façon à être espacées axialement l'une de l'autre et de sorte que le bout de chaque branche d'un pôle (1—2) fait face à un des pôles de rotor circulaires axialement espacés (8) dont la circonférence est munie de dents, les branches axialement espacées des pôles du stator fournissant ainsi des espaces d'air séparés et axialement espacés aux deux pôles du rotor.

2. Moteur pas à pas du type à aimant permanent selon la revendication 1, dans lequel ledit noyau du stator (1) est formé par des plaques de fer minces stratifiées.

3. Moteur pas à pas du type à aimant permanent selon la revendication 1, dans lequel ledit noyau de stator (1) est formé par une matière magnétique frittée.

4. Moteur pas à pas du type à aimant permanent selon la revendication 1, dans lequel ledit noyau de stator (1) est formé en conformant une matière magnétique finement pulvérisée à l'aide d'une résine.

0 170 742

F I G . I (a)

F I G . I (b)

F I G . 2 (a)

F I G . 2 (b)

1

F I G . 3

F I G . 4